Europäisches Patentamt

European Patent Office

Office européen des brevets

(19)

(11) Veröffentlichungsnummer : **0 134 286**
**B1**

(12) **EUROPÄISCHE PATENTSCHRIFT**

(45) Veröffentlichungstag der Patentschrift :
09.08.89

(21) Anmeldenummer : 83108657.4

(22) Anmeldetag : 02.09.83

(51) Int. Cl.⁴ : **C 02 F   1/40**, B 01 D 17/02//
**E02B15/04**

(54) **Verfahren zum Separieren eines Öl-Wasser-Gemisches und hierfür ausgebildete Vorrichtung.**

(30) Priorität : 27.08.83 DE 8324679 U

(43) Veröffentlichungstag der Anmeldung :
20.03.85 Patentblatt 85/12

(45) Bekanntmachung des Hinweises auf die Patenterteilung : 09.08.89 Patentblatt 89/32

(84) Benannte Vertragsstaaten :
AT BE CH DE FR GB IT LI NL SE

(56) Entgegenhaltungen :
FR–A– 2 376 081
GB–A–   779 952
US–A– 2 570 977
US–A– 3 849 285
US–A– 4 315 822
US–H–   401 221

(73) Patentinhaber : **Jastram-Werke GmbH & Co. KG**
**Billwerder Billdeich 603**
**D-2050 Hamburg 80 (DE)**

(72) Erfinder : **Münte, Harm-Hinrich**
**Gartenstrasse 9**
**D-2057 Reinbek-Neuschönningstedt (DE)**
Erfinder : **Waas, Heinrich, Dr.-Ing.**
**Am Stadtwald 50**
**D-5300 Bonn 2 (Bad Godesberg) (DE)**

(74) Vertreter : **Richter, Joachim, Dipl.-Ing. et al**
**Patentanwälte Richter u.Werdermann Neuer Wall 10**
**D-2000 Hamburg 36 (DE)**

## Beschreibung

Die Erfindung betrifft ein verfahren zum Separieren eines einem geschlossenen Raum zugeführten, in Menge und Mischungsverhältnis schwankenden Gemisches aus Wasser und Öl mit einem dem Wasser gegenüber geringeren spezifischen Gewicht und eine zur Durchführung des Verfahrens ausgebildete Vorrichtung.

Bei Unfällen von Tankern oder an Ölanlagen auf See, Flüssen oder Binnengewässern, bei denen Öl ausläuft, entstehen durch das sich ausbreitende Öl dünne, großflächige Ölteppiche, die zu großen Umweltschäden führen können. Derartige, großflächige Ölteppiche auf See und auf Gewässern müssen daher möglichst schnell beseitigt werden. Hierfür sind zahlreiche Verfahren bekannt, die jedoch nicht immer optimal und wirtschaftlich einsetzbar sind, da die meisten Verfahren nur in Verbindung mit auf See einsetzbaren Schiffen verwendbar sind, so daß derartige speziell hierfür ausgebildete Schiffe nicht einsetzbar sind auf Flüssen und Binnengewässern. Hinzu kommt, daß die bekannten verfahren und Vorrichtungen kaum dafür geeignet sind, auch auf Land eingesetzt zu werden, wenn auf einem angrenzenden Fluß oder Gewässer schwimmendes Öl aufgenommen werden soll.

Bei einem bekannten Verfahren gemäß der FR-A- 2 376 081 werden Öl/Wassergemische in einen geschlossenen Behälter eingepumpt. Auf dem Flüssigkeitsspiegel schwimmt ein Trichter, der mittels Schwimmer auf der Flüssigkeitsoberfläche gehalten wird. Das stabförmige Abflußrohr des Trichters mündet in einen weiteren Behälter und ist in einem im oberen Bereich dieses Behälters ausgebildeten Stutzen gleitend geführt. Über den Trichter fließt das Öl nach unten in diesen weiteren Behälter und von diesem zu einem Auslaß, der am Boden des den Trichter aufnehmenden Behälters angeordnet ist. Das Wasser des diesem Behälter zugeführten Öl/Wassergemisches wird ebenfalls im bodenseitigen Bereich des Behälters abgesogen. Die Höhe des Trichters wird durch die Menge an Öl in dem zweiten Behälter und die Höhe des Flüssigkeitsspiegels im ersten Behälter bestimmt. Auch wenn bei diesem Verfahren Öl und Wasser nach erfolgter Trennung abgesogen werden, wird jedoch in keiner Weise die Absaugung durch ein Steuerverfahren unterbrochen, wenn die Menge an Öl oder die Menge an Wasser einen vorgegebenen Mindestwert unterschreiten. Da die eigentliche Separationseinrichtung feststehend im Innenraum des Behälters angeordnet ist, kann die Separationseinrichtung nicht unterschiedlichen Höhenlagen des Flüssigkeitsspiegels im Innenraum des Behälters folgen, so daß nicht vermieden werden kann, daß in den auf dem Flüssigkeitsspiegel schwimmenden Trichter nicht nur Öl, sondern auch Wasser mit einfließt. Hinzu kommt, daß die Separationseinrichtung nicht so ausgebildet ist, daß das Öl von dieser selbst abgesogen und abgeleitet wird, sondern das Öl sammelt sich im Innenraum des zweiten Behälters und wird dann von diesem abgesogen. Hinzu kommt, daß bei dieser Separationseinrichtung keine untere Begrenzung eines Flüssigkeitsstandes über Steuervorrichtungen oder Meßvorrichtungen erfaßt wird, denn wenn der Flüssigkeitsspiegel in dem ersten Behälter bis unterhalb des zweiten Behälters abgesenkt wird, wird über die Wasserabzugsleitung nicht nur Wasser, sondern noch vorhandenes Wasser/Ölgemisch oder Öl abgesogen.

Nach der US-A-3 849 285 ist eine Öl/Wasserseparierungsvorrichtung bekannt, die aus einem Behälter mit Einlässen und Auslässen besteht, dem vermittels einer Pumpe Öl/Wassergemische zugeführt werden. In dem Innenraum dieses Behälters sind senkrecht stehende Trennwände angeordnet, und zwar derart, daß das eingepumpte Öl/Wassergemisch mehrfach umgelenkt wird, so daß aufgrund dieser Umlenkung eine Trennung von Öl und Wasser derart erfolgt, daß in der Kammer, in der dann Öl und Wasser abgesogen werden, eine Anreicherung des Öls an der Flüssigkeitsoberfläche erfolgt. Bei dieser Separationsvorrichtung sind keine gesteuerten Absaugungsvorgänge in Abhängigkeit stark schwankender Mengen an verschmutztem Wasser mit unterschiedlichen Ölgehalten vorgesehen.

Die Erfindung löst die Aufgabe, ein Verfahren und eine Vorrichtung zu schaffen, mit denen es möglich ist, ein Öl/Wassergemisch wirtschaftlich zu separieren, so daß eine stark schwankende Menge an verschmutztem Wasser mit unterschiedlichen Ölgehalten behandelbar ist, und zwar unabhängig davon, ob es sich dabei um das Öl/Wassergemisch aus einer auf hoher See, im Wasser eines Hafenbeckens oder auf dem Wasser eines Flusses oder Binnensees schwimmenden Ölschicht handelt. Eine weitere Aufgabe der Erfindung ist es, die Separierungsvorrichtung derart auszubilden, daß diese ortsbeweglich ist und sowohl auf See als auch auf Land und auch von einem Flugzeug, wie Hubschrauber, eingesetzt werden kann.

Diese Aufgabe wird bei einem Verfahren zum Separieren eines einem geschlossenen Raum zugeführten, in Menge und Mischungsverhältnis schwankenden Gemisches aus Wasser und Öl mit einem dem Wasser gegenüber geringeren spezifischen Gewicht, wobei aus dem oberen Bereich des geschlossenen, das Öl/Wassergemisch aufnehmenden Raumes das Öl der sich auf dem Wasser sammelnden Ölschicht in Abhängigkeit vom jeweiligen Höhenstand des Flüssigkeitsspiegels des Gemisches in dem Raum und aus dessen unteren Bereich Wasser getrennt voneinander abgesogen werden, durch die im Patentanspruch 1 gekennzeichneten Merkmale gelöst.

Zur Lösung der Aufgabe sieht die Erfindung ferner eine Vorrichtung zum Separieren eines einem Behälter zugeführten, in Menge und Mischungsverhältnis schwankenden Gemisches aus Wasser und Öl mit einem dem Wasser gegenüber geringeren spezifischen Gewicht unter Verwendung eines auf dem Flüssigkeitsspiegel liegenden Schwimmers mit einer Ölabnahmeöffnung vor, die die im Patentanspruch 2 gekennzeichneten Merkmale aufweist.

Die mit einem derartigen Verfahren und der hierzu ausgebildeten Vorrichtung erreichten Vorteile sind im wesentlichen darin zu sehen, daß alle für ein Separieren eines in Menge und Mischungsverhältnis schwankenden Gemisches aus Wasser und Öl erforderlichen Einrichtungen in einem geschlossenen Behälter untergebracht sind, dem über eine Zuführungsleitung das zu separierende Öl/Wassergemisch zugeführt wird. Auf diese Weise ist eine Baueinheit erhalten, die vielseitig einsetzbar ist. So ist es möglich, den Behälter mit der Separierungseinrichtung auf Land, z. B. auf dem Kai eines Hafenbeckens, zu stationieren, um ölverschmutzte Gewässer mühelos dadurch reinigen zu können, daß das auf einem See, Gewässer, Fluß od. dgl. aufgenommen und der Separierungseinrichtung in dem Behälter zugeführt wird. Mittels der Separierungseinrichtung erfolgt dann ohne aufwendige technische Einrichtungen das Trennen von Öl und Wasser, und zwar in der Weise, daß aus dem oberen Teil des Behälters das Öl und aus seinem unteren Teil das Wasser durch je eine Leitung abgesogen werden können, wobei die Ölabsaugleitung im Inneren des Behälters an dem gelenkig und höhenbeweglich mit dem Behälter verbundenen Schwimmer befestigt und elastisch ausgebildet ist, während die Wasserabsaugleitung fest mit dem Behälter verbunden ist. Durch Messung der schwankenden Höhenlagen der Trennebene Öl/Wasser werden die beiden Absaugpumpen der Ölabsaugleitung und der Wasserabsaugleitung so gesteuert, daß jeweils die Pumpe abgeschaltet wird, bei der der Abstand ihrer Ansaugöffnung im Behälter zur Trennebene Öl/Wasser einen Mindestwert unterschreitet.

Der Behälter mit der Separierungseinrichtung ist auch auf dem Fahrgestell eines Fahrzeuges montierbar und somit als mobiles Einsatzfahrzeug überall dort einsetzbar, wo Öl abgesogen und, vom Wasser getrennt werden soll. Des weiteren besteht die Möglichkeit, den Behälter mit der Separierungseinrichtung im Innenraum eines Schiffes anzuordnen, so daß auch auf hoher See das Öl von einem ausgebreiteten Ölteppich aufgenommen und vom Wasser separiert werden kann.

Dadurch, daß die Separierungseinrichtung mit dem die Ölansaugöffnung aufweisenden Schwimmer im Innenraum eines Behälters angeordnet ist, ist es möglich, auf dem Wasser schwimmende Ölschichten mit großer Dicke zu schaffen, so daß große Mengen an Öl von Wasser getrennt und abgeleitet werden können. Da der Schwimmer der jeweiligen Höhenlage des Flüssigkeitsspiegels im Innenraum des Behälters sich anpaßt, ist ein optimales Separieren und Aufnehmen vom Öl gewährleistet. Weist die auf dem Wasser in dem Innenraum des Behälters schwimmende Ölschicht nur eine geringe Dicke auf, dann wird die Ölabsaugung unterbrochen und nur noch weiterhin Wasser abgesogen, so daß der gesamte Flüssigkeitsspiegel im Innenraum des Behälters abgesenkt wird. Erreicht die auf dem Wasser schwimmende Ölschicht aufgrund erneuter Zuführung eines Öl/Wassergemisches eine größere Dicke, so wird die Ölabsaugung wieder aufgenommen bis wiederum die Ölschicht eine Dicke einnimmt, aufgrund der sich ein weiteres Ölabsaugen nicht mehr rentiert, so daß dann wiederum nur Wasser aus dem Innenraum des Behälters abgesogen wird, damit ausreichend Raum zur Aufnahme eines neu zugeführten Öl/Wassergemisches zur Verfügung steht.

Ferner sieht die Erfindung zur Lösung der Aufgabe eine weitere vorrichtung zum Separieren eines einem Behälter mit in seinem Innenraum angeordneten Trennwänden zugeführten, in Menge und Mischungsverhältnis schwankenden Gemisches aus Wasser und Öl mit einem dem Wasser gegenüber geringeren spezifischen Gewicht vor, die die im Patentanspruch 13 gekennzeichneten Merkmale aufweist.

Eine derart ausgebildete Vorrichtung weist keine konstruktiv aufwendigen Bauteile auf und ist einfach zu handhaben. Das auf dem Wasser schwimmende Öl im Innenraum dieses Behälters, wird abgesogen, wobei in gleicher Weise eine Steuerung der Saugpumpen insofern vorgenommen wird, als jeweils diejenige Saugpumpe abgeschaltet wird, bei der der Abstand der Ansaugöffnung ihre Absaugleitung zur Trennebene Öl/Wasser einen Mindestwert unterschreitet.

Vorteilhafte Ausgestaltungen der Erfindung sind in den Unteransprüchen gekennzeichnet.

Durch die im Patentanspruch 7 angegebene technische Ausgestaltung ist ein schnelles und müheloses Auswechseln der Separierungseinrichtung mit dem Schwimmer möglich, falls dies beispielsweise für eine Wartung od. dgl. erforderlich werden sollte. Des weiteren erbringt diese Ausgestaltung den vorteil, daß örtlich im Bereich von Gefahrenstellen lediglich leere Behälter aufzustellen sind, die dann im Einsatzfall mit der am Deckel für den Aufnahmestutzen des Behälters angeordneten Separierungseinrichtung ausgerüstet werden, indem lediglich der Deckel mit der Separierungseinrichtung auf den Aufnahmestutzen gesetzt und mit ihm verschraubt wird. Es ist dann lediglich die Zuführungsleitung für das Öl/Wassergemisch mit einer Schlauchleitung zu versehen, damit das zu separierende Öl/Wassergemisch dem Behälter zugeführt werden kann. Des weiteren sind dann die an dem Deckel vorgesehenen Anschlußstutzen für die Ölableitung und Wasserableitung in entsprechender Weise mit Schlauchleitungen zu versehen, damit nach dem Separieren das Öl und das Wasser in entsprechend vorbereitete Vorratsbehälter gepumpt werden kann.

Durch die im Patentanspruch 10 angegebenen technischen Merkmale wird eine Separierungsvorrichtung von hoher Wirtschaftlichkeit geschaffen, da ein schneller Flüssigkeitsdurchsatz durch den Separierungsbehälter erreicht wird. Öl/Wassergemische enthalten dicke Ölblasen und dicke Wasserblase neben einem Gemisch aus

Öl/Wasserbläschen. Die dicken Ölblasen steigen von der die beiden Kammern des Behälters trennenden Wand nach oben, während die dicken Wasserbläschen absinken. Sowohl die nach oben steigenden dicken Ölblasen als auch die absinkenden dicken Wasserblasen suchen ihren kürzesten Weg zu den Ansaugstutzen in dem Behälter. Der kürzeste Weg ist der Weg durch die schlitzförmigen Durchbrechungen in den oberen und unteren Endbereichen der Flüssigkeitsstromführungswände. Dadurch wird eine hohe Durchströmungsgeschwindigkeit und ein schnelles Ableiten des aus dem Öl/Wassergemisch separierten Öls und Wassers erreicht. Das Gemisch aus Öl/Wasserbläschen benötigt einen längeren Zeitraum für ein Separieren. Da jedoch die separierten dicken Ölbläschen und die dicken Wasserbläschen sofort abgeleitet werden, kann dieses schnelle Ableiten nicht durch das Gemisch aus Öl/Wasserbläschen beeinträchtigt werden. Während die dicken Ölbläschen und die dicken Wasserbläschen abgeleitet werden, kann das Separieren des Gemisches aus Öl- und Wasserbläschen erfolgen, für das mehr Zeit benötigt wird, denn diese müssen durch das Labyrinth strömen, daß von den Flüssigkeitsstromführungswänden gebildet wird. Eine derart hohe Wirtschaftlichkeit einer Separierungsvorrichtung wird mit einer Ausgestaltung einer Separierungsvorrichtung nicht erreicht, wie diese durch die US-A-3 849 285 bekannt ist, auch wenn der bei dieser Separierungsvorrichtung vorgesehene Behälter in seinem Innenraum eine Anzahl von Trennwänden aufweist, die gegenüber der Höhe des Behälters eine Höhe aufweisen, die kürzer ist, so daß zwischen der oberen und der unteren Behälterwand und dem oberen und dem unteren Ende einer jeden Trennwand schlitzförmige Durchbrechungen ausgebildet werden. Bei dieser Separierungsvorrichtung wird jedoch der Flüssigkeitsspiegel des Öl/Wassergemisches etwa in halber Höhe zur Höhe des Behälters gehalten, so daß das Öl/Wassergemisch nur durch die bodenseitigen schlitzförmigen Durchbrechungen hindurchströmen kann, während die im oberen Bereich des Innenraumes des Behälters ausgebildeten schlitzförmigen Durchbrechungen zur Ableitung der im Öl/Wassergemisch enthaltenen Gase dienen, so daß über diese oberen schlitzförmigen Durchbrechungen kein Öl/Wassergemisch strömt.

Ausführungsbeispiele der Erfindung werden nachstehend anhand der Zeichnung näher erläutert.

Es zeigt:

Fig. 1 teils in Ansicht, teils in einem senkrechten Schnitt, eine Vorrichtung zum Separieren eines Öl/Wassergemisches,

Fig. 2 in einer schematischen Schnittdarstellung eine weitere Ausführungsform einer Separierungsvorrichtung mit im Innenraum eines Behälters ausgebildeten Kammern und mit in einer der beiden Kammern in unterschiedlichen Höhenbereichen angeordneten Ansaugöffnungen für das Öl und das Wasser, und

Fig. 3 eine Ansicht von oben der Separierungsvorrichtung gemäß Fig. 2.

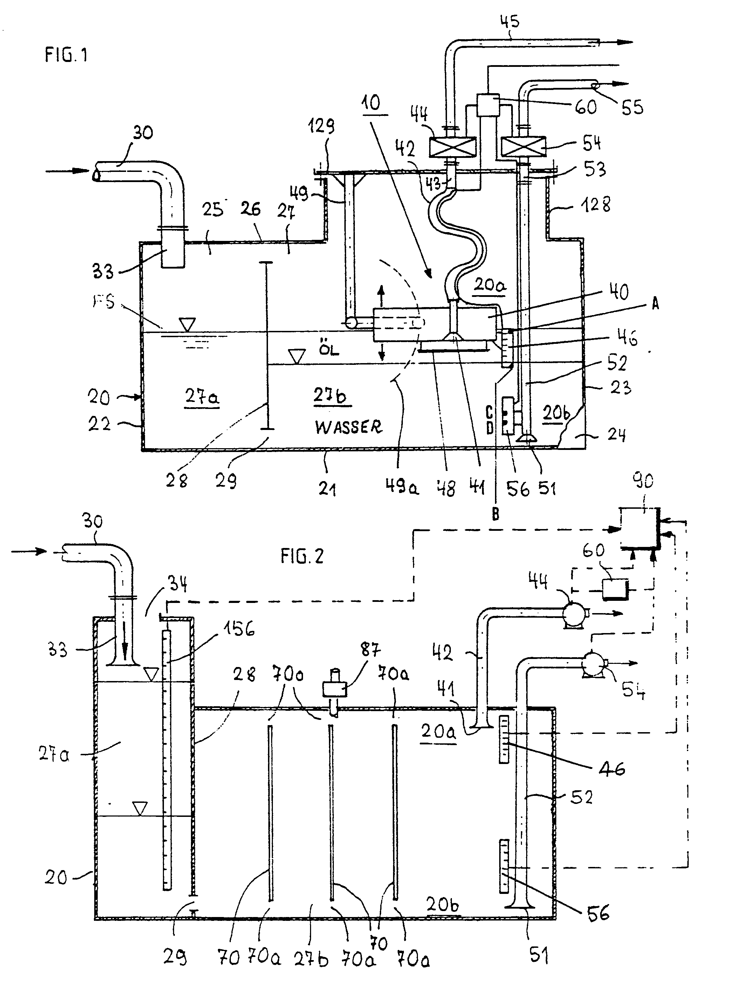

Die Vorrichtung zum Separieren eines Öl-Wasser-Gemisches besteht nach der in Fig. 1 gezeigten Ausführungsform aus einem geschlossen ausgebildeten Behälter 20 mit dem Boden 21, den Seitenwänden 22, 23, 24, 25 und der oberen Abdeckung 26. Für die Zuführung des zu separierenden Öl/Wassergemisches ist eine Zuführungsleitung 30 vorgesehen, die an der oberen Abdeckung 26 des Behälters 20 angeschlossen ist. Dieser Anschluß kann auch mittels eines Anschlußstutzens 33 erfolgen (Fig. 2).

Im oberen Bereich 20a des Innenraumes 27 des Behälters 20 ist ein auf dem Flüssigkeitsspiegel FS in dem Behälterinnenraum schwimmender Schwimmer 40 angeordnet, der über eine Halterung 49 an die obere Abdeckung 26 des Behälters 20 angeschlossen ist. Die Ausbildung dieser Halterung 49 und der Anschluß des Schwimmers 40 an diese Halterung ist derart, daß der Schwimmer 40 der jeweiligen Höhe des Flüssigkeitsspiegels FS unbehindert folgen kann.

In dem Innenraum 27 des Behälters 20 befindet sich das über die Zuführungsleitung 30 zugeführte Öl/Wassergemisch. Die Ölschicht ist mit « Öl » und die Wasserschicht mit « Wasser » bezeichnet.

Anstelle der Halterung 49 kann der Schwimmer 40 auch mittels Führungen im Innenraum 27 des Behälters 20 geführt und gehalten sein. Diese bei 49a angedeuteten Führungen sind an den sich gegenüberliegenden Seitenwänden des Behälters 20 vorgesehen. In diesen beiden Führungen 49a ist dann der Schwimmer 40 geführt. Vorteilhafterweise sind die Führungen 49a kreisbogenförmig ausgebildet, so daß eine einwandfreie Führung des Schwimmers 40 in Anpassung an den jeweiligen Ölstand des Flüssigkeitsspiegels gewährleistet ist.

Der Schwimmer 40, der aus einem entsprechend ausgebildeten Hohlkörper aus metallischen Werkstoffen, Kunststoffen oder anderen geeigneten Werkstoffen besteht, weist an seiner dem Boden 21 des Behälters 20 zugekehrten Wandfläche 40a eine Ölansaugöffnung 41 auf, die an eine flexible Ölabsaugleitung 42 angeschlossen ist, die an einem Stutzen 43 in der oberen Abdeckung 26 des Behälters 20 angeschlossen ist. Außerhalb des Behälters 20 ist an diesen Anschlußstutzen 43 eine Ölableitung 45 angeschlossen, in die eine Saugpumpe 44 eingeschaltet ist, über die das Öl der Ölschicht der Flüssigkeit im Innenraum 27 des Behälters 20 angesogen und über die Ölableitung 45 einem in der Zeichnung nicht dargestellten Vorratsbehälter zugeführt wird. Dadurch, daß die Ölabsaugleitung 42 als flexibler Schlauch ausgebildet ist, paßt sich die Ölabsaugleitung 42 jeder Höhenstellung des Schwimmers 40 im Innenraum 27 des Behälters 20 an.

Im Höhenbewegungsbereich des Schwimmers 40 ist ein Steuersignalgeber oder Flüssigkeitsspiegelmeßeinrichtung 46 angeordnet. Dieser Steuersignalgeber oder Flüssigkeitsspiegelmeßeinrichtung 46 ist im Innenraum 27 des Behälters 20 fest angeordnet und steuert über eine Steuereinrichtung 60 den Betrieb der Saugpumpe 44 in der Ölabsaugleitung 42 oder in der Ölableitung 45. Vorteilhafterweise ist die Saugpumpe 44 in dem Anschlußstutzen 43 in der oberen Abdeckung 26 des Behälters 20 angeordnet. Die flexible Ölabsaugleitung 42 nimmt erforderliche elektrische Leitungen auf, über die die Steuerimpulse für den Motor der Saugpumpe 44 geleitet werden, wenn der Steuersignalgeber oder die Flüssigkeitsspiegelmeßeinrichtung 46 mittels Kontaktfühlern arbeiten. Jedoch auch eine rein mechanische Ausgestaltung ist möglich. Auf die Arbeitsweise des Steuersignalgebers oder Flüssigkeitsspiegelmeßeinrichtung 46 wird nachstehend noch näher eingegangen.

Die Ölansaugöffnung 41 in dem Schwimmer 40 ist mittels einer im Abstand von der Ölansaugöffnung 41 an der bodenseitigen Wandfläche 40a des Schwimmers 40 angeordneten Platte 48 abgedeckt, so daß die Zuströmung des Öls nur radial und in horizontaler Richtung erfolgen kann (Fig. 1).

Im Innenraum 27 des Behälters 20 ist ferner eine Wasserabsaugleitung 52 angeordnet, deren Wasseransaugöffnung 51 im bodenseitigen Bereich 20b des Innenraumes 27 des Behälters 20 zu liegen kommt. Diese Wasserabsaugleitung 52 ist als starre Rohrleitung ausgebildet und fest an die obere Abdeckung 26 des Behälters 20 angeschlossen. Der Anschluß der Wasserabsaugleitung 52 an der oberen Abdeckung 26 des Behälters 20 kann mittels eines Anschlußstutzens 53 erfolgen, der an der oberen Abdeckung 26 befestigt ist und an den eine außerhalb des Behälters 20 liegende Wasserableitung 55 anschließbar ist. In der Wasserabsaugleitung 52 oder in dem Anschlußstutzen 53 oder in der Wasserableitung 55 ist eine Saugpumpe 54 angeordnet.

Im Bereich der Wasseransaugöffnung 51, die eine feste Position im Innenraum 27 des Behälters 20 einnimmt, ist ein Steuersignalgeber oder Flüssigkeitsspiegelmeßeinrichtung 56 angeordnet. Die Arbeitsweise dieses Steuersignalgebers oder Flüssigkeitsspiegelmeßeinrichtung 56 ist entsprechend der des Steuersignalgebers oder Flüssigkeitsspiegelmeßeinrichtung 46. Auch in der Wasserabsaugleitung 52 kann eine elektrische Leitung ausgehend von dem Steuersignalgeber oder Flüssigkeitsspiegelmeßeinrichtung 56 angeordnet sein, wenn elektrische Steuereinrichtungen vorgesehen sind.

Mittels der beiden Steuersignalgeber und Flüssigkeitsspiegelmeßeinrichtung 46, 56 werden die jeweilige obere und untere Ölabsauggrenze und die jeweilige obere und untere Wasserabsauggrenze festgelegt. Die beiden Steuersignalgeber oder Flüssigkeitsspiegelmeßeinrichtungen 46, 56 sind in der Steuereinrichtung 60 zusammengeführt, die über die beiden Saugpumpen 44, 54 in den beiden Absaugleitungen 42, 52 derart steuerbar sind, daß jeweils die Saugpumpe abgeschaltet wird, bei der der Abstand der Ansaugöffnung zur Trennebene Öl/Wasser einen Mindestwert unterschreitet. Beide Steuersignalgeber oder Flüssigkeitsspiegelmeßeinrichtungen 46, 56 weisen Endbegrenzungen A und B bzw. C und D auf. Die Ölsaugpumpe 44 saugt, solange der Meßwert größer als AB ist. Die Wassersaugpumpe 54 ist ebenfalls solange in Betrieb, solange der Meßwert größer als CD ist. Im wesentlichen werden durch Messung der schwankenden Höhenlage der Trennebene Öl/Wasser die beiden Absaugpumpen 44, 54 so gesteuert, daß jeweils die Pumpe abgeschaltet wird, bei der der Abstand ihrer Saugöffnung im Behälter zur Trennebene Öl/Wasser einen Mindestwert unterschreitet. Die beiden Steuersignalgeber oder Flüssigkeitsspiegelmeßeinrichtungen 46, 56 sind in an sich bekannter Weise ausgebildet; sie können auch als Flüssigkeitsnäherungsinitiatoren ausgebildet sein.

Der Behälterinnenraum 27 ist mittels einer Trennwand 28 in zwei Kammern 27a, 27b unterteilt. Die Trennwand 28 ist dabei so ausgebildet, daß diese zumindest bodenseitig ein oder mehrere Durchbrechungen 29 aufweist, damit das in die Kammer 27a eingeleitete Öl/Wassergemisch in die Kammer 27b gelangen kann, so daß sich die auf der Wasseroberfläche bildende Ölschicht an der Trennwand 28 sammeln kann (Fig.1).

Die Gesamtsteuerung der Saugpumpen 44, 54 in Verbindung mit dem Zulauf für das Öl/Wassergemisch über die Zuführungsleitung 30 ist derart, daß im Behälterinnenraum 27 eine möglichst dicke Ölschicht ausgebildet wird und daß diese Ölschicht nach Möglichkeit im Bereich des Schwimmers 40 gehalten wird, wobei jedoch aufgrund der Anordnung des Schwimmers 40 im Behälterinnenraum 27 der Schwimmer Höhenveränderungen des Flüssigkeitsspiegels ohne weiteres folgen kann, so daß der Schwimmer 40 sich immer im Bereich der Ölschicht befindet.

Nach der in Fig. 1 gezeigten Ausführungsform ist der Behälter 20 in seinem oberen Bereich 20a mit einem Aufnahmestutzen 128 für den Schwimmer 40, die flexible Ölabsaugleitung 42 und die Wasserabsaugleitung 52 versehen. Aufgrund des so ausgebildeten Domes ist die Möglichkeit gegeben, den Flüssigkeitsspiegel im Behälterinnenraum 27 relativ hoch ansteigen zu lassen, jedoch nicht bis in den Innenraum des Aufnahmestutzens 128, der dann zur Aufnahme der flexiblen Ölabsaugleitung 42 und des Schwimmers 40 dient.

Der Aufnahmestutzen 128 ist mittels eines abnehmbaren Deckels 129 verschließbar, an dem die Halterung 49 für den Schwimmer 40, die beiden Absaugleitungen 42 und 52, die Saugpumpen 44, 54, die Steuereinrichtung 60 sowie die Anschlüsse für die Ölableitung 45 und die Wasserableitung 55 befestigt sind. Der Schwimmer 40, seine Ölansaugöffnung 41, die mit dieser verbundene flexible Ölabsaugleitung 42, der Ansaugstutzen 53 und die Saugpumpe 44 bilden die Ölansaugeinrichtung 10, die aufgrund der Ausbildung des Aufnahmestutzens 128 mit einem abnehmbaren Deckel 129 an diesem befestigt und zur Wartung mühelos aus dem Behälterinnenraum 27 herausgenommen werden kann. Auch die Wasserabsaugleitung 52 mit der Saugpumpe 54 und dem Anschlußstutzen 53 sind an dem Deckel 129 des Aufnahmestutzens 128 befestigt (Fig. 1).

Durch die Befestigung der Ölansaugeinrichtung 10 an einem Deckel 129, einer Tragplatte od. dgl. ist es möglich, auch vorhandene mit einem Mannloch oder einem Aufnahmestutzen versehene Behälter nachträglich mit einer Ölansaugeinrichtung 10 auszurüsten, was besonders vorteilhaft dann ist, wenn aufgrund einer größeren Ölverschmutzung eine Vielzahl von Separierungsvorrichtungen zur Verfügung stehen muß.

Bei der in Fig. 2 gezeigten Ausführungsform ist der Innenraum 27 des Behälters 20 durch eine Trennwand 28 mit bodenseitiger Durchbrechung 29 in zwei über diese Durchbrechung 29 miteinander verbundene Kammern 27a, 27b unterteilt, von denen die Kammer 27b die Hauptkammer bildet, in der die Ölansaugeinrichtung bzw. Separationsvorrichtung 10 angeordnet ist, während die Kammer 27a als Vorkammer mit der Zuführungsleitung 30 für die Zuführung des Öl/Wassergemisches verbunden ist. In der Vorkammer 27a ist eine Flüssigkeitsspiegelmeßeinrichtung 156 angeordnet. Die Kammer 27a ist ferner über eine Durchbrechung 34 mit der Außenluft verbunden. Die Kammer 27b des Behälters 20, die über die Trennwand 28 mit der bodenseitigen Durchbrechung 29 von der Kammer 27a abgetrennt ist, ist allseitig geschlossen ausgebildet, bis auf die Verbindungsdurchbrechung 29 zur Kammer 27a. Die Kammer 27b ist mit einer Luftabsaugungseinrichtung 87 versehen. Des weiteren sind in der Kammer 27b die Ölabsaugleitung 42 mit der Ölansaugöffnung 41 und die Wasserabsaugleitung 52 mit der Wasseransaugöffnung 51 angeordnet. Bei dieser in Fig. 2 gezeigten Ausführungsform braucht jedoch die Ölabsaugleitung 42 nicht als flexible Leitung ausgebildet zu sein. In der Ölabsaugleitung 42 ist die Saugpumpe 44 und in der Wasserabsaugleitung 52 die Saugpumpe 54 angeordnet. Druckstutzenseitig sind an beide Saugpumpen 44, 54 die Ölableitung 45 und die Wasserableitung 55 angeschlossen. Die Anordnung der Ölabsaugleitung und der Wasserabsaugleitung in der Kammer 27b ist derart, daß die Ölansaugöffnung 41 der Ölabsaugleitung 42 im oberen Bereich 20a der Kammer 27b angeordnet ist, während die Wasseransaugöffnung 51 der Wasserabsaugleitung 52 im bodenseitigen Bereich der Kammer 27b zu liegen kommt. Im Bereich beider Ansaugöffnungen 41, 51 ist je ein Steuersignalgeber oder Flüssigkeitsspiegelmeßeinrichtung 46, 56 angeordnet. Auch hier sind die Steuersignalgeber oder Flüssigkeitsspiegelmeßeinrichtungen 46, 56 in der Steuereinrichtung 60 zusammengeführt.

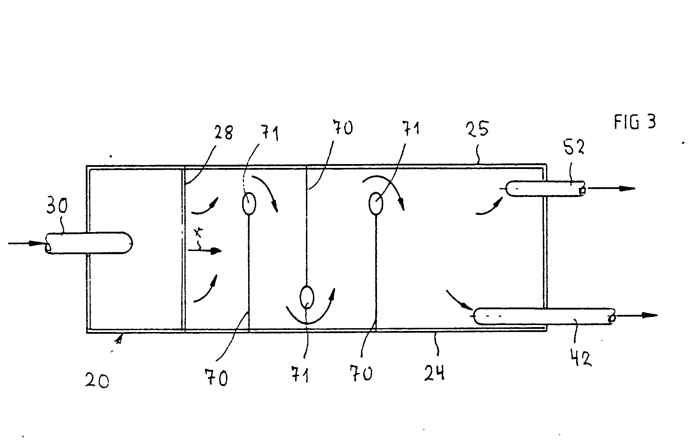

Wie Fig. 2 und 3 zeigen, ist in der Hauptkammer 27b eine Anzahl von senkrecht und quer zur Flüssigkeitsdurchströmrichtung X verlaufende Flüssigkeitsstromführungswände 70 angeordnet, deren Länge gegenüber der Breite des Behälters 20 kürzer bemessen ist und von denen jede zweite Flüssigkeitsstromführungswand an einer der beiden Seitenwände 24, 25 des Behälters 20 befestigt ist, während die jeweils anderen Flüssigkeitsstromführungswände 70 an der jeweils gegenüberliegenden Seitenwand des Behälters 20 angeschlossen sind. Bei der in Fig. 3 gezeigten Ausführungsform sind im Anschluß an die Trennwand 28 in der Kammer 27b des Behälters 20 an der Behälterseitenwand 24 zwei Flüssigkeitsstromführungswände angeordnet, während an der gegenüberliegenden Behälterseitenwand 25 eine einzige Flüssigkeitsstromführungswand 70 befestigt ist, die zwischen den beiden an der Behälterseitenwand 26 befestigten Flüssigkeitsstromführungswänden liegt. Alle Flüssigkeitsstromführungswände sind gegenüber der Breite des Behälters 20 kürzer bemessen, so daß die Flüssigkeit zwischen den Flüssigkeitsstromführungswänden hindurchströmen kann. Die freien Enden der Flüssigkeitsstromführungswände 70 sind mit Flüssigkeitsumlenkprofilen 71 versehen, so daß ein günstiger Strömungsverlauf der Flüssigkeit durch die Kammer 27b gewährleistet ist.

Wie Fig. 2 zeigt, weisen die in der Kammer 27b des Behälters 20 angeordneten Flüssigkeitsstromführungswände 70 eine Höhe auf, die gegenüber der Höhe des Behälters 20 geringer ist, so daß in den beiden Endbereichen einer jeden Flüssigkeitsstromführungswand 70 benachbart zur oberen und unteren Behälterwand schlitzförmige Durchbrechungen 70a ausgebildet werden.

Der Behälter 20 mit der Ölansaugeinrichtung 10 und der Wasserabsaugleitung 52 ist als Aufsatzgerät auf die Fahrgestelle von Kraftfahrzeugen oder Eisenbahnfahrzeugen ausgebildet. Auch ein Einbau des Behälters 20 in Schiffsräume ist möglich.

Die in der Vorkammer 27a des Behälterinnenraumes 27 angeordnete Flüssigkeitsspiegelmeßeinrichtung 156 und die in der Hauptkammer 27b angeordneten Steuersignalgeber oder Flüssigkeitsspiegelmeßeinrichtungen 46, 56 sind mit einer Pumpenmotorendrehzahlregelvorrichtung 90 verbunden (Fig. 2). Die Pumpenmotorendrehzahlregelvorrichtung 90 ist die Meßwerte der Meßeinrichtungen 46, 56, 156 als Ist-Werte aufnehmend und diese Meßwerte mit vorgegebenen Soll-Werten vergleichend zur Steuerung der Motoren der Saugpumpen 44, 54 ausgebildet.

## Patentansprüche

1. Verfahren zum Separieren eines einem geschlossenen Raum zugeführten, in Menge und Mischungsverhältnis schwankenden Gemisches aus Wasser und Öl mit einem dem Wasser gegenüber geringeren spezifischen Gewicht, wobei aus dem oberen Bereich des geschlossenen, das Öl/Wassergemisch aufnehmenden Raumes das Öl der sich auf dem Wasser sammelnden Ölschicht in Abhängigkeit vom jeweiligen Höhenstand des Flüssigkeitsspiegels des Gemisches in dem Raum und aus dessen unterem Bereich Wasser getrennt voneinander abgesogen werden, dadurch gekennzeichnet, daß durch Messung des sich verändernden Höhenstandes des Flüssigkeitsspiegels des Gemisches die Ölabsaugung und die Wasserabsaugung derart gesteuert werden, daß jeweils der Absaugungsvorgang unterbrochen wird, für den die Menge an Öl oder die Menge an Wasser zur Trennebene Öl/Wasser einen Mindestwert unterschreitet.

2. Vorrichtung zum Separieren eines einem Behälter zugeführten, in Menge und Mischungsverhältnis schwankenden Gemisches aus Wasser und Öl mit einem dem Wasser gegenüber geringeren spezifischen Gewicht unter Verwendung eines auf dem Flüssigkeitsspiegel liegenden Schwimmers mit einer Ölabnahmeöffnung zur Durchführung des Verfahrens nach Anspruch 1, dadurch gekennzeichnet, daß der in dem mit einer Zuführungsleitung (30) für das Öl/Wassergemisch versehene Behälter (20) in dessen oberem Bereich (20a) auf dem Flüssigkeitsspiegel (FS) liegende und sich der jeweiligen Höhe des Flüssigkeitsspiegels anpassende Schwimmer (40) mit einer Ölansaugöffnung (41) und einer sich an diese anschließenden, flexiblen, mit dem Behälter (20) fest verbundenen Ölabsaugleitung (42) mit einer Saugpumpe (44) und in dessen unterem Bereich (20b) die feststehende Wasseransaugöffnung (51) einer mit einer Saugpumpe (54) versehenen, mit dem Behälter (20) fest verbundenen Wasserabsaugleitung (52) und im Höhenbewegungsbereich des Schwimmers (40) mit der Ölabsaugöffnung (41) ein die jeweilige obere und untere Ölabsauggrenze festlegender Steuersignalgeber oder Flüssigkeitsspiegelmeßeinrichtung (46) und im Bereich der Wasseransaugöffnung (51) ein weiterer, die jeweilige obere und untere Wasserabsauggrenze festlegender Steuersignalgeber oder Flüssigkeitsspiegelmeßeinrichtung (56) angeordnet sind, und daß die beiden Steuersignalgeber oder Flüssigkeitsspiegelmeßeinrichtungen (46, 56) in einer Steuereinrichtung (60) zusammengeführt sind, die über die beiden Saugpumpen (44, 54) in den beiden Absaugleitungen (42, 52) derart steuerbar sind, daß jeweils die Saugpumpe abgeschaltet wird, bei der der Abstand der Ansaugöffnung zur Trennebene Öl/Wasser einen Mindestwert unterschreitet.

3. Vorrichtung nach Anspruch 2, dadurch gekennzeichnet, daß der Schwimmer (40) mit der Ölansaugöffnung (41) mittels im Innenraum (27) des Behälters (20) vorgesehener Führungen (47) in Abhängigkeit von der Höhe des Flüssigkeitsspiegels geführt ist.

4. Vorrichtung nach Anspruch 2 und 3, dadurch gekennzeichnet, daß die Ölansaugöffnung (41) in dem Schwimmer (40) in dessen dem Boden (21) des Behälters (20) zugekehrten Wandfläche (40a) ausgebildet ist.

5. Vorrichtung nach Anspruch 4, dadurch gekennzeichnet, daß die bodenseitige Ölansaugöffnung (41) in dem Schwimmer (40) mittels einer in einem Abstand von der Ölansaugöffnung (41) angeordneten Platte (48) abgedeckt ist.

6. Vorrichtung nach Anspruch 2 bis 5, dadurch gekennzeichnet, daß der Behälter (20) in seinem oberen Bereich (20a) einen Aufnahmestutzen (128) für den Schwimmer (40), die flexible Ölabsaugleitung (42) und die Wasserabsaugleitung (52) aufweist.

7. Vorrichtung nach Anspruch 6, dadurch gekennzeichnet, daß der Aufnahmestutzen (128) mittels eines abnehmbaren Deckels (129) verschließbar ist, an dem die Halterung (49) für den Schwimmer (40), die beiden Absaugleitungen (42, 52), die Saugpumpen (44, 54), die Steuereinrichtung (60) sowie die Anschlüsse für die Ölableitung (45) und die Wasserableitung (55) befestigt sind.

8. Vorrichtung nach Anspruch 2 bis 7, dadurch gekennzeichnet, daß die beiden Steuersignalgeber oder Flüssigkeitsspiegelmeßeinrichtungen (46, 56) fest in dem Innenraum (27) des Behälters (20) angeordnet sind.

9. Vorrichtung nach Anspruch 2 bis 8, dadurch gekennzeichnet, daß der Innenraum (27) des Behälters (20) in zwei miteinander durch eine Trennwand (28) mit bodenseitiger Durchbrechung (29) verbundene Kammern (27a, 27b) unterteilt ist, von denen die Hauptkammer (27b) die Separationsvorrichtung (10) aufnimmt, während die Vorkammer (27a) die Öl/Wassergemisch-Zulaufleitung (30) aufweist.

10. Vorrichtung nach Anspruch 9, dadurch gekennzeichnet, daß die Hauptkammer (27b) eine Anzahl von senkrechten und quer zur Flüssigkeitsdurchströmungsrichtung verlaufenden Flüssigkeitsstromführungswände (70) aufweist, deren Länge gegenüber der Breite des Behälters (20) kürzer bemessen ist und von denen jede zweite Flüssigkeitsstromführungswand an einer der beiden Seitenwände (24, 25) des Behälters (20) befestigt ist, während die jeweils anderen Flüssigkeitsstromführungswände an der jeweils gegenüberliegenden Seitenwand des Behälters (20) angeschlossen sind, und daß die Flüssigkeitsstromführungswände (70) eine Höhe aufweisen, die gegenüber der Höhe der Kammer (20b) des Behälters (20) geringer bemessen ist, wobei zwischen den Enden einer jeden Flüssigkeitsstromführungswand (70) und der oberen und der unteren Behälterwand schlitzförmige Durchbrechungen (70a) ausgebildet sind.

11. Vorrichtung nach Anspruch 10, dadurch gekennzeichnet, daß die freien Enden der Flüssigkeitsstromführungswände (70) mit Flüssigkeitsumslenkungsprofilen (71) versehen sind.

12. Vorrichtung nach Anspruch 2 bis 11, dadurch gekennzeichnet, daß der Behälter (20) geschlossen ausgebildet und mit Anschlußstutzen (33, 43, 53) für die Öl/Wassergemisch-Zulaufleitung (30), die Ölabsaugleitung (42) und die Wasserabsaugleitung (52) versehen ist, und daß an die Anschlußstutzen (43, 53) für die Ölabsaugleitung (42) und die Wasserabsaugleitung (52) die außerhalb des Behälters (20) angeordnete Ölableitung (45) und die Wasserableitung (55) angeschlossen sind.

13. Vorrichtung zum Separieren eines einem Behälter mit in seinem Innenraum angeordneten Trennwänden zugeführten, in Menge und Mischungsverhältnis schwankenden Gemisches aus Wasser und Öl mit einem dem Wasser gegenüber geringeren spezifischen Gewicht zur Durchführung des Verfahrens nach Anspruch 7, dadurch gekennzeichnet, daß der geschlossen ausgebildete Behälter (20) mittels einer senkrechten Trennwand (28) in zwei Kammern (27a, 27b) unterteilt ist, die bodenseitig mit Durchbrechungen (29) versehen ist, daß die Vorkammer (27a) mit einer Öl/Wassergemisch-Zulaufleitung (30) versehen ist und in ihrem Innenraum einen sich über die gesamte Kammerhöhe erstreckenden Steuersignalgeber oder Flüssigkeitsspiegelmeßeinrichtung (56) aufweist sowie über eine Öffnung (34) mit der Außenluft verbunden ist, daß im Innenraum der luftdicht verschlossenen Kammer (27b) die Ansaugöffnungen (41, 51) einer Ölabsaugleitung (42) und einer Wasserabsaugleitung (52) angeordnet sind, daß beide Absaugleitungen (42, 52) Saugpumpen (44, 54) aufweisen, die mit einer Steuereinrichtung (60) verbunden sind, daß die Ölansaugöffnung (41) der Ölabsaugleitung (42) im oberen Bereich (20a) der Behälterkammer (27b) und die Ansaugöffnung (57) der Wasserabsaugleitung (52) im bodenseitigen Bereich (20b) der Behälterkammer (27b) angeordnet sind, und daß im Bereich einer jeden Ansaugöffnung (41; 51) ein Steuersignalgeber oder Flüssigkeitsspiegelmeßeinrichtung (46, 56) in der Steuereinrichtung (60) derart zusammengeführt sind, daß jeweils die Saugpumpe abgeschaltet wird, bei der der Abstand der Ansaugöffnung ihrer Absaugleitung zur Trennebene Öl/Wasser einen Mindestwert unterschreitet, daß die Hauptkammer (27b) eine Anzahl von senkrecht und quer zur Flüssigkeitsdurchströmungsrichtung verlaufenden Flüssigkeitsstromführungswände (70) aufweist, deren Länge gegenüber der Breite des Behälters (20) kürzer bemessen ist und von denen jede zweite Flüssigkeitsstromführungswand an einer der beiden Seitenwände (24, 25) des Behälters (20) befestigt ist, während die jeweils anderen Flüssigkeitsstromführungswände an der jeweils gegenüberliegenden Seitenwand des Behälters (20) angeschlossen sind, und daß die Flüssigkeitsführungswände (70) eine Höhe aufweisen, die gegenüber der Höhe der Kammer (20b) des Behälters (20) geringer bemessen ist, wobei zwischen den Enden einer jeden Flüssigkeitsstromführungswand (70) und der oberen und der unteren Behälterwand schlitzförmige Durchbrechungen (70a) ausgebildet sind.

14. Vorrichtung nach einem der vorangegangenen Ansprüche 2 bis 13, dadurch gekennzeichnet, daß der Behälter (20) als Aufsatzgerät für Fahrgestelle von Kraftfahrzeugen oder Eisenbahnfahrzeugen ausgebildet ist.

15. Vorrichtung nach einem der vorangegangenen Ansprüche 2 bis 14, dadurch gekennzeichnet, daß der Behälter (20) im Innenraum eines Schiffskörpers angeordnet ist.

16. Vorrichtung nach einem der vorangegangenen Ansprüche 2 bis 15, dadurch gekennzeichnet, daß im oberen Bereich (20a) des Behälters (20) eine Luftabsaugeinrichtung (88) vorgesehen ist.

17. Vorrichtung nach Anspruch 2 bis 16, dadurch gekennzeichnet, daß die Steuersignalgeber oder Flüssigkeitsspiegelmeßeinrichtungen (46, 56, 156) mit einer Pumpenmotorendrehzahlregeleinrichtung (90) verbunden sind.

18. Vorrichtung nach Anspruch 17, dadurch gekennzeichnet, daß die Pumpenmotorendrehzahleinrichtung (90) die Meßwerte der Steuersignalgeber oder Flüssigkeitsspiegelmeßeinrichtungen (46, 56, 156) als Ist-Werte aufnehmend und diese Meßwerte mit vorgegebenen Soll-Werten vergleichend zur Steuerung der Motoren der Saugpumpen (44, 54) ausgebildet ist.

**Claims**

1. Process for separating an oil-water mixture supplied to an enclosed space which fluctuates as to quantity and mixture ratio and having a lower specific weight as compared to that of the water. In which, from the upper area of the enclosed space which accommodates the oil-water mixture, the oil of the oil layer accumulating on the water, depending on the respective height of the liquid level of the mixture within the space and, from its lower area, water, are drawn off separately from each other, characterized in that, by measuring the changing height of the liquid level of the mixture, the drawing off of the oil and the drawing off of the water are controlled in such a way that the drawing-off operation is interrupted each time when the quantity of oil or the quantity of water, relative to the plane of separation, falls below a minimum value.

2. Device for separating an oil-water mixture supplied to a tank and fluctuating as to quantity and mixture ratio and having a lower specific weight as compared to that of the water while employing a float lying on the liquid level with an oil removal aperture for carrying out the process according to the Claim 1, characterized in that the tank (20) provided with a feeder pipe (30) for the oil-water mixture, within its upper area (20a), is equipped with floats (40) lying on the liquid level (FS) that adapt to the respective height of the liquid level with an oil suction aperture (41) and a flexible oil drawing-off pipe (42) with a suction pump (44) following these and rigidly connected with the tank (20) and, within its lower area (20b), the stationary water suction aperture (51) of a water drawing-off pipe (52) provided with a suction pump (54) and rigidly connected with the tank (20) and, within the vertical motion range of the float (40) with the oil drawing-off aperture (41), a control signal transmitter or liquid level measuring device (46) which establishes the respective upper and lower oil drawing-off limit and, within the area of the water drawing-off aperture (51), a further control signal transmitter or liquid level measuring device (56) which establishes the respective upper and lower water drawing-off limit are disposed, and in that the two control signal transmitters or liquid level measuring devices (46, 56) are brought together in a control means (60) which, by means of the two suction pumps (44, 54) in the two drawing-off pipes (42, 52), are controllable in such a way that, in each case, the suction pump is switched off when the distance of the suction aperture from the oil-water plane of separation falls below a certain minimum value.

3. Device according to the Claim 2, characterized in that the float (40) with the oil suction aperture (41) is, with the aid of guide means (47) fitted within the interior (27) of the tank (20), guided as a function of the height of the liquid level.

4. Device according to the Claims 2 and 3, characterized in that the oil suction aperture (41) in the float (40) is constructed within the wall area (40a) of the same which faces the bottom (21) of the tank (20).

5. Device according to the Claim 4, characterized in that the oil suction aperture in the bottom (41) of the float (40) is covered by means of a plate (48) arranged a distance away from the oil suction aperture (41).

6. Device according to the Claims 2 to 5, characterized in that the tank (20), within its upper area (20a), is provided with an admission connecting piece (128) for the float (40), the flexible oil drawing-off pipe (42) and the water drawing-off pipe (52).

7. Device according to the Claim 6, characterized in that the admission connecting piece (128) can be closed by means of a detachable cover (129), on which are secured the mounting (49) for the float (40), the two drawing-off pipes (42, 52), the suction pumps (44, 54), the control means (60) as well as the unions for the oil outlet pipe (45) and the water outlet pipe (55).

8. Device according to the Claims 2 to 7, characterized in that the two control signal transmitters or liquid level measuring devices (46, 56) are fixedly disposed within the interior (27) of the tank (20).

9. Device according to the Claims 2 to 8, characterized in that the interior (27) of the tank (20) is divided into two chambers (27a, 27b) which intercommunicate by means of a partition (28) with an opening (29) at its bottom, of which the main chamber (27b) accommodates the separating device (10), while the antechamber (27a) houses the oil-water inlet pipe (30).

10. Device according to the Claim 9, characterized in that the main chamber (27b) is provided with a plurality of vertical liquid flow guide walls (70) extending transversally to the flow direction of the liquid, the length of which, in comparison with the width of the tank (20), is dimensioned so as to be shorter and of which each second liquid flow guide wall is secured to one of the two side walls (24, 25) of the tank (20), while the respective other liquid flow guide walls are connected to the respective opposite side walls of the tank (20) and in that the liquid flow guide walls (70) have a height, which, as against the height of the chamber (20b) of the tank (20), is dimensioned so as to be smaller, while slot-like perforations (70a) are constructed between the ends of each liquid flow guide wall (70) and the upper and the lower tank walls.

11. Device according to the Claim 10, characterized in that the free ends of the liquid flow guide walls (70) are fitted with liquid deflection sections (71).

12. Device according to the Claims 2 to 11, characterized in that the tank (20) is constructed so as to be closed and provided with connecting pieces (33, 43, 53) of the oil-water mixture feeding pipe (30), the oil drawing-off pipe (42) and the water drawing-off pipe (52), and in that, to the connecting pieces (43, 53) of the oil drawing-off pipe (42) and the water drawing-off pipe (52), the oil outlet pipe (45) and the water outlet pipe (55) arranged outside the tank (20), are connected.

13. Device for separating an oil-water mixture supplied to a tank with partitions fitted to its interior and fluctuating as to quantity and mixture-ratio and having a lower specific weight as compared to that of the water for carrying out the process according to the Claim 1, characterized in that the tank (20) constructed so as to be closed, by means of a vertical partition (28), is divided into two chambers (27a, 27b) which, in its bottom, is provided with perforations (29), in that the antechamber (27a) is provided with an oil-water mixture feeding pipe (30) and, within its interior, has a control signal transmitter or liquid level measuring device (56) extending across the entire height of the chamber and communicates with the ambient air via an opening (34), in that, within the interior of the hermetically sealed chamber (27b), the suction apertures (41, 51) of an oil drawing-off pipe (42) and a water drawing-off pipe (52) are disposed, in that both drawing-off pipes (42, 52) are equipped with suction pumps (44, 54) that are connected with a control means (60), in that the oil suction aperture (41) of the oil drawing-off pipe (42) within the upper area (20a) of the tank chamber (27b) and the suction aperture (51) of the water drawing-off pipe (52) are arranged within the bottom area (20b) of the tank chamber (27b), and in that, within the area of each suction aperture (41 ; 51), a control signal transmitter or liquid level measuring device (46, 56) are brought together within the control means (60) in such a manner that the suction pump is switched off each time when the distance of the suction aperture of its drawing-off pipe relative to the oil-water plane of separation falls below a certain minimum value, in that the main chamber (27b) is provided with a plurality of liquid flow guide walls (70) extending vertically as well as transversally to the direction of the flow of the liquid, the length of which, by comparison with the width of the tank (20), is dimensioned so as to be shorter, and of which each second liquid flow guide wall is secured to one of the two side walls (24, 25) of the tank (20), while the respective other liquid flow guide walls are connected to the respective opposite side walls of the tank (20), and in that the liquid flow guide walls (70) possess a height which, as against the height of the chamber (20b) of the tank (20), is dimensioned so as to be smaller, while, between the ends of each liquid flow guide wall (70) and the upper and the lower tank wall, slot-like perforations (70a) are constructed.

14. Device according to any of the preceding Claims 2 to 13, characterized in that the tank (20) is constructed in such a fashion that it can be employed for mounting on the chassis of motor or railroad vehicles.

15. Device according to any of the preceding Claims 2 to 14, characterized in that the tank (20) is mounted within the interior of a ship's hull.

16. Device according to any of the preceding Claims 2 to 15, characterized in that, within the upper area (20a) of the tank (20), an air extraction device (88) is provided.

17. Device according to the Claims 2 to 16, characterized in that the control signal transmitters or liquid level measuring devices (46, 56, 156) are connected to a pump motor speed control device (90).

18. Device according to the Claim 17, characterized in that the pump motor speed control device (90) is constructed in such a way that it receives the measured values of the control signal transmitters or liquid level measuring devices (46, 56, 156) and so as to compare these measured values with predetermined target values for controlling the motors of the suction pumps (44, 54).

## Revendications

1. Procédé pour séparer un mélange huile-eau de quantité et de rapport de mélange variable, avec un poids spécifique inférieur à celui de l'eau, amené à un espace clos, l'huile de la couche d'huile qui s'accumule sur l'eau et qui provient de la zone supérieure de l'espace clos qui recueille le mélange huile-eau et l'eau qui provient de la zone inférieure de celui-ci étant aspirées de manière séparée en fonction de la hauteur respective du niveau de liquide du mélange, caractérisé en ce que l'aspiration de l'huile et l'aspiration de l'eau sont commandées, par mesure de la hauteur variable du niveau de liquide du mélange, de telle manière que le procédé d'aspiration est respectivement interrompu lorsque la quantité d'huile ou la quantité d'eau par rapport au plan de séparation huile/eau n'atteint pas une certaine valeur minimale.

2. Appareil pour séparer un mélange huile-eau de quantité et de rapport de mélange variable, amené à un conteneur, avec un poids spécifique inférieur à celui de l'eau, qui utilise un flotteur, qui se trouve sur le niveau de liquide, qui présente un orifice de prélèvement d'huile, pour exécuter le procédé selon la revendication 1, caractérisé en ce que le flotteur (40) qui se trouve dans le conteneur (20) équipé d'une conduite d'alimentation (30) pour le mélange huile-eau, sur le niveau de liquide et qui s'adapte à la hauteur respective du niveau de liquide et qui comporte un orifice d'aspiration de l'huile (41) et une conduite flexible d'aspiration de l'huile (42), qui s'y rattache et qui est reliée de manière fixe au conteneur (20), avec une pompe d'aspiration (44), est placé dans la zone supérieure (20a) du conteneur, que l'orifice fixe d'aspiration de l'eau (51) d'une conduite d'aspiration de l'eau (52) reliée de manière fixe au conteneur (20) et équipée d'une pompe d'aspiration (54) est ménagé dans la zone inférieure (20b) du conteneur, qu'un transmetteur de signaux de commande ou dispositif de mesure du niveau de liquide (46), qui fixe la limite supérieure et la limite inférieure respective d'aspiration de l'huile, est placé dans la zone de déplacement en hauteur du flotteur (40) avec l'orifice d'aspiration de l'huile (41) et qu'un autre transmetteur de signaux de commande ou dispositif de mesure du niveau de liquide (56), qui fixe la limite supérieure et la limite inférieure respective d'aspiration de l'eau, se trouve dans la zone de l'orifice d'aspiration de l'eau (51) et que les deux transmetteurs de signaux de commande ou dispositifs de mesure du niveau de liquide (46, 56) sont réunis en un organe de commande (60) et qu'ils peuvent être commandés par les deux pompes d'aspiration (44, 54) des deux conduites d'aspiration (42, 52) de telle manière que la pompe d'aspiration, pour laquelle la distance entre l'orifice d'aspiration et le plan de séparation huile/eau n'atteint pas une certaine valeur minimale, est respectivement mise hors circuit.

3. Appareil selon la revendication 2, caractérisé en ce que le flotteur (40), qui présente l'orifice d'aspiration de l'huile (41), est guidé à l'aide de guides (47) prévus dans l'espace intérieur (27) du conteneur (20) en fonction de la hauteur du niveau de liquide.

4. Appareil selon les revendications 2 et 3, caractérisé en ce que l'orifice d'aspiration de l'huile (41) du flotteur (40) est configuré dans sa surface de paroi (40a) qui est tournée vers le fond (21) du conteneur (20).

5. Appareil selon la revendication 4, caractérisé en ce que l'orifice d'aspiration de l'huile (41) situé sur le côté du fond du flotteur (40) est recouvert par une plaque (48) placée à une certaine distance de l'orifice d'aspiration de l'huile (41).

6. Appareil selon les revendications 2 à 5, caractérisé en ce que le conteneur (20) présente dans sa zone supérieure (20a) une tubulure de logement (128) pour le flotteur (40), la conduite flexible d'aspiration de l'huile (42) et la conduite d'aspiration de l'eau (52).

7. Appareil selon la revendication 6, caractérisé en ce que la tubulure de logement (128) peut être fermée par un couvercle amovible (129) auquel la fixation (49) du flotteur (40), les deux conduites d'aspiration (42, 52), les pompes d'aspiration (44, 54), l'organe de commande (60) ainsi que les raccords pour la conduite d'évacuation de l'huile (45) et la conduite d'évacuation de l'eau (55) sont fixés.

8. Appareil selon les revendications 2 à 7, caractérisé en ce que les deux transmetteurs de signaux de commande ou dispositifs de mesure du niveau de liquide (46, 56) sont placés de manière fixe dans l'espace intérieur (27) du conteneur (20).

9. Appareil selon les revendications 2 à 8, caractérisé en ce que l'espace intérieur (27) du conteneur (20) est divisé en deux chambres (27a, 27b) reliées l'une à l'autre par une cloison (28) avec une découpure (29) sur le fond, la chambre principale (27b) logeant le dispositif de séparation (10), tandis que la première chambre (27a) présente la conduite d'arrivée (30) du mélange huile-eau.

10. Appareil selon la revendication 9, caractérisé en ce que la chambre principale (27b) présente une multitude de parois de guidage du courant de liquide (70), verticales et transversales par rapport au sens de l'écoulement du liquide, dont la longueur est inférieure à la largeur du conteneur (20) et parmi lesquelles chaque deuxième paroi de guidage du courant de liquide est fixée à l'une des deux parois latérales (24, 25) du conteneur (20), tandis que les autres parois de guidage du courant de liquide respectives sont reliées à la paroi latérale respectivement opposée du conteneur (20) et que les parois de guidage du courant de liquide (70) présentent une hauteur qui est inférieure à la hauteur de la chambre (20b) du conteneur (20), des découpures en forme de fente (70a) étant formées entre les extrémités de chacune des parois de guidage du courant de liquide (70) et la paroi de conteneur supérieure et inférieure.

11. Appareil selon la revendication 10, caractérisé en ce que les extrémités libres des parois de guidage du courant de liquide (70) sont équipées de profils de déviation de liquide (71).

12. Appareil selon les revendications 2 à 11, caractérisé en ce que le conteneur (20) est formé de manière fermée et qu'il est équipé d'ajutages (33, 43, 53) pour la conduite d'arrivée (30) du mélange huile-eau, pour la conduite d'aspiration de l'huile (42) et la conduite d'aspiration de l'eau (52) et que la conduite d'évacuation de l'huile (45), placée à l'extérieur du conteneur (20) et la conduite d'évacuation de l'eau (55) sont raccordées aux ajutages (43, 53) de la conduite d'aspiration de l'huile (42) et de la conduite d'évacuation de l'eau (52).

13. Appareil pour séparer un mélange huile-eau de quantité et de rapport de mélange variable, amené à un conteneur présentant des cloisons placées dans son espace intérieur, avec un poids spécifique inférieur à celui de l'eau, pour exécuter le procédé selon la revendication 1, caractérisé en ce que le conteneur (20) formé de manière fermée est divisé en deux chambres (27a, 27b) au moyen d'une cloison verticale (28) qui est pourvue de découpures (29) sur son fond, que la première chambre (27a) est équipée d'une conduite d'arrivée du mélange huile-eau (30), qu'elle présente, dans son espace intérieur, un transmetteur de signaux de commande ou dispositif de mesure du niveau de liquide (56) qui s'étend sur toute la hauteur de la chambre et qu'elle est reliée à l'air extérieur par un orifice (34), que les orifices d'aspiration (41, 51) d'une conduite d'aspiration de l'huile (42) et d'une conduite d'aspiration de l'eau (52) sont placés dans l'espace intérieur de la chambre (27b) fermée de manière hermétique, que les deux conduites d'aspiration (42, 52) présentent des pompes d'aspiration (44, 54) qui sont reliées à un organe de commande (60), que l'orifice d'aspiration de l'huile (41) de la conduite d'aspiration de l'huile (42) se trouve dans la zone supérieure (20a) de la chambre (27b) du conteneur, que l'orifice d'aspiration (51) de la conduite d'aspiration de l'eau (52) se trouve dans la zone du fond (20b) de la chambre (27b) du conteneur, qu'un transmetteur de signaux de commande ou dispositif de mesure du niveau de liquide (46, 56) est placé respectivement dans la zone de chaque orifice d'aspiration (41, 51) et qu'ils sont réunis en un organe de commande (60) de telle manière que la pompe d'aspiration, pour laquelle la distance entre l'orifice d'aspiration de sa conduite d'aspiration et le plan de séparation huile/eau n'atteint pas une certaine valeur minimale, est respectivement mise hors circuit, que la chambre principale (27b) présente une multitude de parois de guidage du courant de liquide (70), verticales et transversales par rapport au sens de l'écoulement du liquide, dont la longueur est inférieure à la largeur du conteneur (20) et parmi lesquelles chaque deuxième paroi de guidage du courant de liquide est fixée à l'une des deux parois latérales (24, 25) du conteneur (20), tandis que les autres parois de guidage du courant de liquide respectives sont reliées à la paroi latérale respectivement opposée du conteneur (20) et que les parois de guidage du liquide (70) présentent une hauteur qui est inférieure à la hauteur de la chambre (20b) du conteneur (20), des découpures en forme de fente (70a) étant formées entre les extrémités de chacune des parois de guidage du courant de liquide (70) et la paroi de conteneur supérieure et inférieure.

14. Appareil selon l'une des revendications précédentes 2 à 13, caractérisé en ce que le conteneur (20) est formé comme un appareil rapporté pour les châssis des véhicules automobiles ou des véhicules de chemin de fer.

15. Appareil selon l'une des revendications précédentes 2 à 14, caractérisé en ce que le conteneur (20) est placé dans l'espace intérieur d'une coque de navire.

16. Appareil selon l'une des revendications précédentes 2 à 15, caractérisé en ce qu'un dispositif d'aspiration de l'air (88) est prévu dans la zone supérieure (20a) du conteneur (20).

17. Appareil selon les revendications 2 à 16, caractérisé en ce que les transmetteurs de signaux de commande ou dispositif de mesure du niveau de liquide (46, 56, 156) sont reliés à un dispositif de réglage de la vitesse des moteurs des pompes (90).

18. Appareil selon la revendication 17, caractérise en ce que le dispositif de réglage de la vitesse des moteurs des pompes (90) est configuré pour la commande des moteurs des pompes d'aspiration (44, 54) en captant les valeurs de mesure des transmetteurs de signaux de commande ou dispositifs de mesure du niveau de liquide (46, 56, 156) comme des valeurs effectives et en comparant ces valeurs de mesure avec les valeurs de consigne données.

FIG.1

FIG.2

FIG 3